# DEMANDE DE BREVET EUROPEEN

(11) **EP 1 187 077 A1**
(43) Date de publication de la demande: **13.03.2002**
(21) Numéro de dépôt: 00402483.2
(22) Date de dépôt: 08.09.2000
(51) Int. Cl.: G07F 7/10

(54) **Procédé de sécurisation d'une transaction sur l'internet**

(71) Demandeur: Clerc, Jean-Charles, 34120 Pezenas (FR)
(72) Inventeur: Clerc, Jean-Charles, 34120 Pezenas (FR)
(74) Mandataire: Rinuy, Santarelli

(57) **Abrégé**

L'invention est relative à un procédé de sécurisation d'une transaction sur l'Internet entre une station cliente et un site Web d'un fournisseur de produits et/ou de services, caractérisé en ce qu'il comporte les étapes suivantes
- connexion de la station cliente au site Web du fournisseur de produits et/ou de services via l'Internet,
- sélection d'au moins un produit et/ou un service sur ce site Web,
- fourniture au site Web d'un ensemble de données spécifiques représentatives d'un compte dit de transaction sur l'Internet affecté à un client (A), lesdites données spécifiques comportant un numéro dit de carte de transaction qui est délivré par une autorité de validation des transactions, une date d'expiration associée au compte de transaction et des données représentatives du nom du compte de transaction, les données spécifiques représentatives de ce compte étant indépendantes des données contenues dans des comptes bancaires courants du client (A) et ne comportant aucun lien avec le nom dudit client.

## Description

L'invention concerne un procédé de sécurisation d'une transaction sur l'Internet entre une station cliente et un site web d'un fournisseur de produits et/ou de services.

L'Internet est constitué d'un grand nombre d'ordinateurs et de réseaux d'ordinateurs qui sont connectés entre eux par l'intermédiaire de liens de communication.

Ces ordinateurs interconnectés échangent des informations au moyen de services divers tels que le courrier électronique, Gopher et le World Wide Web (Web ou WWW).

Le Web constitue l'interface de prédilection pour accéder à la plupart des ressources disponibles sur l'Internet.

Le Web est un ensemble de protocoles Internet et de logiciels présentant les informations dans un format hypertexte.

Le concept d'hypertexte s'emploie pour construire des documents qui référencent d'autres documents à l'aide de liens, aisément sélectionnables par des utilisateurs novices.

Le Web permet à un système informatique dit serveur, tel que par exemple un serveur Web ou un site Web, d'envoyer des pages Web graphiques contenant de l'information à un ordinateur client ou station cliente éloigné.

La station cliente éloignée peut ensuite afficher les pages Web.

De nos jours on utilise de plus en plus le Web pour pratiquer le commerce électronique en effectuant des transactions entre des stations clientes et des sites Web de fournisseurs de produits et/ou de services.

En effet, on trouve sur le Web des sites de fournisseurs de produits tels que, par exemple, des disques compacts (CD), des livres et de services tels que, par exemple, des billets de spectacles, des billets d'avion et de train...

En se connectant au site Web d'un fournisseur de produits et/ou de services à partir d'une station cliente, un client peut naviguer dans un catalogue de produits et/ou de services proposés par le fournisseur et ainsi sélectionner divers produits et/ou services qu'il désire acquérir.

Lorsque le client a fini de sélectionner des produits et/ou des services, il doit confirmer sa commande.

Pour ce faire, le client doit transmettre son nom, le numéro de sa carte de crédit, la date d'expiration de celle-ci, ainsi qu'une adresse pour la livraison des produits et/ou services achetés.

Ensuite, le site Web du fournisseur confirme la commande en envoyant une page Web à la station cliente.

Etant donné que le client désirant effectuer une transaction sur l'Internet fournit au site Web le numéro de sa carte de crédit, sa date d'expiration ainsi que son nom, il existe un besoin de sécuriser la transmission de telles informations.

En effet, de telles informations transmises sur l'Internet peuvent emprunter divers chemins avant de parvenir à leur destination finale et, au cours du cheminement de ces informations, celles-ci peuvent être interceptées par des personnes mal intentionnées.

Afin de sécuriser les transactions sur l'Internet entre une station cliente et un site Web d'un fournisseur de produits et/ou de services, de nombreuses techniques d'encryptage de ces informations aux fins de leur transmission ont été mises en place.

On a également pu constater que même si les techniques d'encryptage étaient très performantes, il existait toujours un risque non négligeable qu'une personne mal intentionnée puisse parvenir à les décrypter et s'approprier ainsi ces informations confidentielles.

Par ailleurs, de tels risques d'interception et de décryptage de ces informations constituent souvent pour le futur acheteur un frein au commerce électronique.

On connaît également une méthode décrite dans le brevet américain numéro 5 960 411 de Hartman et al. pour sécuriser la transmission d'informations confidentielles lors de transactions sur l'Internet.

Toutefois, une telle méthode n'est pas simple à mettre en oeuvre.

Il serait par conséquent intéressant de trouver un procédé de sécurisation de ce type de transaction qui soit simple à mettre en oeuvre, ne nécessite pas une remise en question des méthodes actuellement utilisées pour effectuer des transactions sur l'Internet entre une station cliente et un site Web d'un fournisseur de produits et/ou de services et ne constitue pas un frein au commerce électronique du point de vue de l'acheteur en ligne.

La présente invention a ainsi pour objet un procédé de sécurisation d'une transaction sur l'Internet entre une station cliente et un site Web d'un fournisseur de produits et/ou de services, caractérisé en ce qu'il comporte les étapes suivantes :
- connexion de la station cliente au site Web du fournisseur de produits et/ou de services via l'Internet,
- sélection d'au moins un produit et/ou un service sur ce site Web,
- fourniture au site Web d'un ensemble de données spécifiques représentatives d'un compte dit de transaction sur l'Internet affecté à un client (A), lesdites données spécifiques comportant un numéro dit de carte de transaction qui est délivré par une autorité de validation des transactions, une date d'expiration associée au compte de transaction et des données représentatives du nom du compte de transaction, les données spécifiques représentatives de ce compte étant indépendantes des données contenues dans le ou les comptes bancaires courants du client (A) et ne comportant aucun lien avec le nom dudit client.

En utilisant un compte réservé aux transactions sur l'Internet et totalement indépendant de tout compte bancaire du client pour effectuer une transaction, la transaction est sécurisée pour le client par rapport à une transaction effectuée au moyen de données propres à sa carte de crédit qui est en relation avec l'un des comptes bancaires courants de ce client.

En effet, en cas d'interception des données spécifiques représentatives du compte de transaction par une personne mal intentionnée, le risque pour le client est limité à la somme d'argent restante sur ce compte spécifique et non, comme dans l'art antérieur, à la somme restante sur son compte bancaire courant.

Grâce à l'invention les transactions peuvent être effectuées sur tous les sites Web de fournisseurs de produits et/ou de services et pas seulement sur un nombre limité d'entre eux.

En effet, certains systèmes de sécurisation des transactions tels que, par exemple, le système "klebox" de la société KLELINE prévoient d'installer sur l'ordinateur du client un logiciel qui constitue en quelque sorte un porte-monnaie électronique.

Toutefois, avec ce genre de système, on ne peut effectuer une transaction qu'avec un site Web acceptant un tel système et possédant l'équipement adéquat.

Le procédé selon l'invention étant particulièrement simple, il ne remet pas en question les mécanismes existants pour le commerce électrique.

Par ailleurs, le procédé selon l'invention présente l'avantage de rendre la transaction anonyme, ce qui évite au client acquéreur d'un produit et/ou d'un service sur l'Internet d'être répertorié dans des fichiers informatiques et, ainsi, de recevoir par la suite de nombreux courriers d'entreprises diverses qui se procurent ces fichiers contre rémunération.

De plus, la consultation de certains sites Web et l'achat de certains produits et/ou services est facilitée par l'anonymat de la transaction.

L'invention a également pour objet un procédé de sécurisation d'une transaction sur l'Internet entre une station cliente et un site Web d'un fournisseur de produits et/ou de services, caractérisé en ce qu'il comporte les étapes suivantes :
- allocation d'une pluralité de zones mémoires dans un système informatique d'un établissement émetteur de comptes tel qu'une banque,
- création d'ensembles de données spécifiques réservées à des fins de transaction sur l'Internet et dont chaque ensemble est représentatif d'un compte dit de transaction sur l'Internet, lesdites données spécifiques représentatives d'un même compte comportant un numéro dit de carte de transaction qui est délivré par une autorité de validation des transactions, une date d'expiration associée au compte de transaction et des données représentatives du nom du compte de transaction Internet, les données spécifiques représentatives d'un même compte étant indépendantes des données contenues dans des comptes bancaires courants existants,
- stockage de ces ensembles de données spécifiques dans la pluralité de zones mémoires,
- affectation de manière anonyme d'au moins un ensemble de données spécifiques réservées à des fins de transaction sur l'Internet à un client (A),
- création d'une donnée représentative d'une somme d'argent,
- stockage de cette donnée dans la zone mémoire dans laquelle sont stockées l'ensemble des données spécifiques réservées à des fins de transaction sur l'Internet affecté au client (A), la donnée représentative d'une somme d'argent ne provenant pas d'un transfert effectué à partir d'une carte bancaire reliée à un compte courant du client (A),
- connexion de la station cliente au site Web du fournisseur de produits et/ou de services via l'Internet,
- sélection d'au moins un produit et/ou un service sur ce site Web, et
- fourniture au site Web du numéro de carte de transaction, de la date d'expiration associée et du nom du compte de transaction Internet affecté au client (A).

Il convient de noter qu'il est important que la ou les données représentatives d'une somme d'argent qui sont stockées dans la zone mémoire où se trouve l'ensemble des données spécifiques réservées à des fins de transaction sur l'Internet affecté au client considéré ne proviennent pas, comme c'est le cas dans l'art antérieur, d'un transfert effectué à partir d'une carte bancaire reliée au compte courant de ce client.

Selon une caractéristique, les données spécifiques représentatives d'un même compte de transaction Internet comportent également un numéro d'identification dudit compte.

Ainsi, ceci permet de créditer ce compte en effectuant un virement bancaire à partir du compte bancaire courant du client auquel est affecté le compte de transaction Internet considéré.

D'autres caractéristiques et avantages apparaîtront au cours de la description qui va suivre, donnée uniquement à titre d'exemple non limitatif et faite en référence aux dessins annexés, sur lesquels :
- la figure 1 est une représentation schématique générale du système dans lequel est mis en oeuvre le procédé selon l'invention ;
- la figure 2 est une représentation schématique d'ensembles de données spécifiques réservées à des fins de transaction sur l'Internet ;
- la figure 3 est une représentation schématique illustrant le procédé selon l'invention.

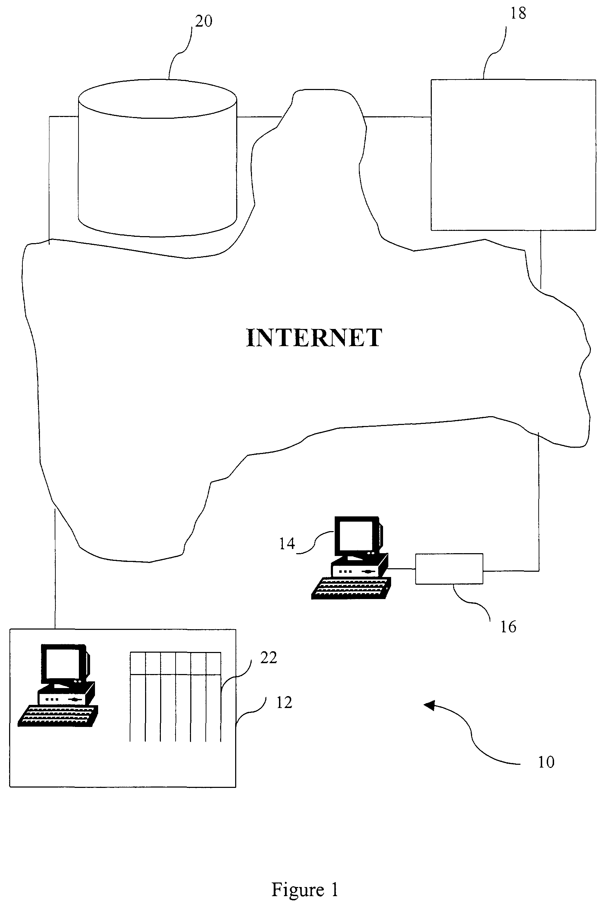

La figure 1 représente de manière schématique un système informatique noté 10 mettant en oeuvre des communications via l'Internet et dans lequel le procédé selon l'invention est mis en oeuvre.

Ce système comporte un système informatique d'un établissement émetteur de comptes noté 12 tel que, par exemple, une banque.

Il pourrait également s'agir, à titre d'alternative, d'autres établissements émetteurs de comptes, comme la Poste ou bien de sociétés du secteur de la grande distribution (hypermarchés...).

On reviendra ultérieurement sur le système informatique de l'établissement émetteur de comptes 12 lors de la description du procédé selon l'invention.

Le système 10 comporte également une station cliente A représentée, par exemple, par un ordinateur 14 équipé d'un modem 16.

Il convient toutefois de noter qu'une telle station cliente peut revêtir d'autres formes telles que, par exemple, un téléphone cellulaire utilisant, par exemple, le protocole de communication dénommé WAP, acronyme signifiant en terminologie anglosaxonne "Wireless Application Protocol", signifiant approximativement Protocole d'Application Sans fil.

Cette station cliente 14 est reliée par l'Internet, représenté de manière très schématique sur la figure 1, à un serveur Web 18 d'un fournisseur de produits et/ou de services qui, lui-même, est connecté à une base de données 20 d'une autorité de validation des transactions telle que l'une des sociétés VISA, AMERICAN EXPRESS, MASTER CARD ou bien une banque.

Ces sociétés sont bien connues comme autorités de validation des transactions à partir de cartes bancaires.

La base de données 20 est également reliée au système informatique de l'établissement émetteur de comptes 12.

Les communications entre les différents éléments du système représentées sur la figure 1, à l'exception des éléments 12 et 14, se font par le biais d'un protocole TCP/IP.

On va maintenant décrire le procédé selon l'invention pour la sécurisation d'une transaction sur l'Internet.

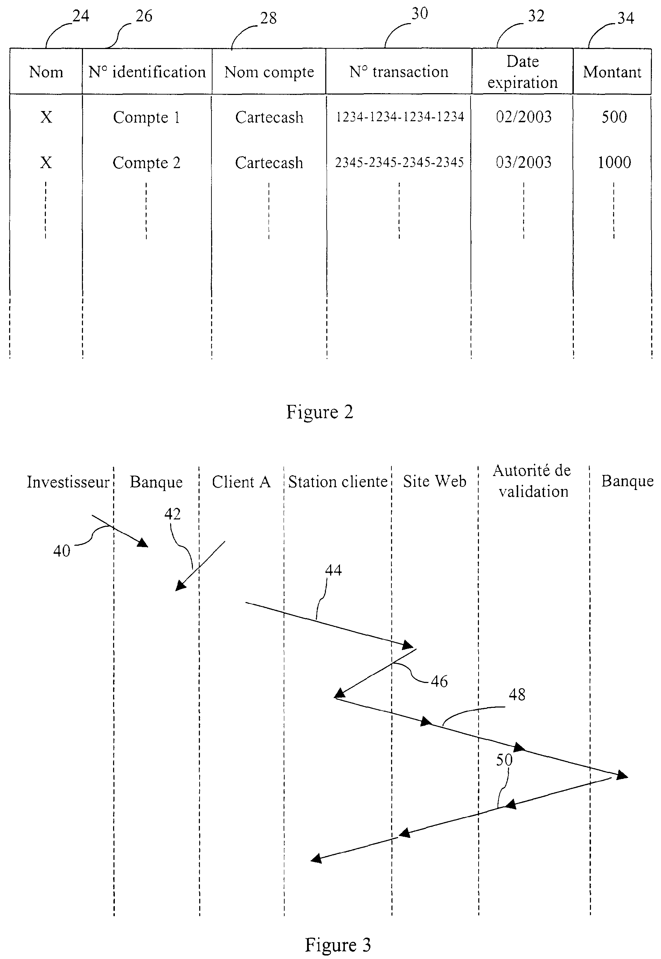

Plus particulièrement, en référence aux figures 1 et 2, on va décrire une phase préalable à la transaction sur l'Internet et qui est nécessaire aux fins de sécurisation de cette future transaction.

Cette phase est initiée par un investisseur, personne physique ou morale, qui va s'adresser auprès de l'établissement émetteur de comptes.

Afin de mettre en place le procédé de sécurisation d'une transaction sur l'Internet selon l'invention, sur demande de l'investisseur, l'établissement 12 va allouer une pluralité de zones mémoires dans son système informatique (ex : espace mémoire d'un disque dur), créer des ensembles de données spécifiques qui vont être réservées à des fins de transaction sur l'Internet et stocker ces ensembles de données dans les zones mémoires réservées du système informatique.

Ceci peut être réalisé en pratique, par exemple, en créant des fichiers informatiques spécifiques contenant ces ensembles de données spécifiques.

Un fichier de ce type noté 22 est représenté sur la figure 1 et, de manière plus détaillée, sur la figure 2.

Le fichier informatique spécifique 22 ainsi créé dans le système informatique de l'établissement émetteur de comptes 12 se présente sous la forme d'un tableau comportant plusieurs colonnes 24, 26, 28, 30, 32 et 34 contenant chacune des données.

La première colonne 24 comporte le nom de l'investisseur représenté par "X" qui a initié la création de ce fichier contenant, par exemple, mille ensembles de données spécifiques réservées à des fins de transaction sur l'Internet.

Chaque ensemble de données spécifiques est représenté sur une même ligne du tableau et comporte en regard dans la première colonne 24 le même nom de l'investisseur pour chacun des mille ensembles de données spécifiques.

Chaque ensemble de données spécifiques est représentatif d'un compte dit de transaction sur l'Internet qui est totalement indépendant de tout compte bancaire courant existant, les données spécifiques contenues dans chacun des ensembles de données spécifiques du tableau de la figure 2 n'ayant en effet rien en commun avec les données contenues dans des comptes bancaires courants existants.

Le tableau de la figure 2 comporte en deuxième colonne 26 des données représentatives du numéro d'identification du compte de transaction Internet considéré, ces données étant représentées par les notations "compte 1", "compte 2"...

Ces données permettent au futur client à qui sera affecté le compte en question d'effectuer des virements bancaires à partir de son compte courant vers le compte de transaction Internet.

Le tableau comporte plus particulièrement les données spécifiques rassemblées dans les colonnes 28, 30 et 32 qui sont celles qui vont être directement utilisées pour permettre au futur client d'effectuer les transactions sécurisées sur l'Internet entre une station cliente et un site Web d'un fournisseur de produits et/ou de services.

Ce sont ces données qui seront transmises sur l'Internet et utilisées pour la transaction.

Ces données sont, dans l'ordre de la figure 2, le nom du compte de transaction Internet considéré représenté en colonne 28, par la notation arbitraire "cartecash" qui est identique pour tous les comptes.

Ces données remplacent dans un système conventionnel le nom du titulaire du compte auquel celui-ci sera affecté, garantissant ainsi l'anonymat du client auquel le compte de transaction Internet sera affecté.

Ces données représentent également, en colonne 30, un numéro dit de carte de transaction qui se présente comme un numéro d'une carte de crédit bancaire conventionnelle.

Ce numéro est délivré par une autorité de validation des transactions (VISA, AMERICAN EXPRESS, MASTER CARD, les banques...) et va permettre au futur client de compte de transaction Internet de pouvoir effectuer des transactions sur l'Internet.

Ainsi, par exemple, ces données sont représentées par les notations "1234-1234-1234-1234", "2345-2345-2345-2345"...

Ces données représentent également en colonne 32 la date d'expiration associée au compte de transaction Internet et qui, comme pour une carte de crédit conventionnelle, fixe la date au-delà de laquelle toute transaction sur l'Internet utilisant les données spécifiques précitées sera impossible.

La création et le stockage des données spécifiques relatives à la date d'expiration sont effectués au moment où le compte de transaction Internet en question est créé.

Les données représentées aux colonnes 28, 30 et 32 sont celles qui vont permettre au futur client auquel sera affecté cet ensemble de données spécifiques réservées à des fins de transactions sur l'Internet d'effectuer une transaction sécurisée du point de vue de ce client.

En effet, ces données seront les seules transmises sur l'Internet et elles ne comportent aucun lien avec les comptes bancaires courants existants de ce client, et notamment aucun lien avec le nom du client utilisateur de ces données.

Par ailleurs, les autres données présentes dans les colonnes 24, 26 et 34 ne comportent elles aussi aucun lien avec les comptes courants existants de futurs clients.

La dernière colonne du tableau de la figure 2 représente le montant de la somme d'argent que le futur client du compte de transaction Internet va affecter à ce dernier.

Cette donnée représentative de la somme d'argent sera créée et stockée ultérieurement dans cette colonne comme on le verra plus tard au moment où le compte de transaction Internet en question est affecté au client utilisateur du compte.

On notera que les données contenues dans la colonne 34 peuvent également se présenter sous la forme de deux sous-colonnes, l'une représentant le crédit du compte et l'autre le débit de ce compte.

La phase préalable à la transaction qui vient d'être décrite est représentée sur la figure 3 par la flèche référencée 40.

Au cours d'une étape suivante représentée par la flèche référencée 42 sur la figure 3, un ensemble de données spécifiques réservées à des fins de transactions sur l'Internet est affecté, de manière anonyme, à un client A.

En effet, l'ensemble des données représentées aux colonnes 26, 28, 30 et 32 de la figure 2 sont remises au client au guichet de l'établissement 12 afin de pouvoir effectuer ultérieurement des transactions sur l'Internet, et ce sans que le client A ne révèle son identité.

Au cours de cette étape, le client approvisionne l'ensemble des données spécifiques réservées à des fins de transactions sur l'Internet afin de créer et de stocker dans cet ensemble une donnée représentative d'une somme d'argent qui va constituer, en quelque sorte, l'unité de paiement directement utilisable sur l'Internet.

Il convient de noter que la donnée ainsi créée ne provient pas d'un transfert effectué à partir d'une carte bancaire ou autre carte de crédit reliée à un compte courant du client A considéré.

En effet, la plupart des systèmes de sécurisation des transactions sur l'Internet qui existent aujourd'hui et qui mettent en oeuvre un porte-monnaie électronique, prévoient d'utiliser une carte de crédit afin d'approvisionner ce porte-monnaie électronique.

On comprendra qu'une telle méthode d'approvisionnement est à écarter si l'on souhaite éviter tout risque de voir une personne mal intentionnée accéder à un compte courant du client sur lequel, par exemple, est notamment versé le salaire de celui-ci.

On notera également que lorsque la date d'expiration associée au compte de transaction est atteinte, le client auquel est affecté le compte peut retirer au guichet de l'établissement émetteur du compte le montant restant sur son compte à concurrence d'une certaine somme d'argent.

L'ensemble des flèches référencées par les numéros 44, 46, 48 et 50 sur la figure 3 illustrent à proprement parler la transaction effectuée sur l'Internet entre la station cliente 14 et le site Web 18 (serveur) d'un fournisseur de produits et/ou de services.

Au cours de la première étape 44 de la transaction, la client A se connecte via l'Internet au site Web 18 du fournisseur et navigue dans un catalogue de produits et/ou de services proposés par ce fournisseur afin d'établir un choix.

Lorsque le client a sélectionné et/ou services qu'il désire acheter, il doit valider son ordre d'achat.

Ensuite, le site Web (étape 46) envoie une page Web à la station cliente lui demandant de confirmer la transaction en fournissant les données confidentielles qui, dans l'art antérieur, représentaient le numéro de sa carte de crédit, la date d'expiration de celle-ci et son nom.

Grâce au procédé selon l'invention, le client auquel a été préalablement affecté un ou plusieurs ensembles de données spécifiques réservées à des fins de transaction sur l'Internet va fournir au site Web le numéro de carte de transaction correspondant à son compte (colonne 30), la date d'expiration associée à son compte (colonne 32) et le nom du compte (colonne 28).

Il convient de noter que, comme dans tout système existant, les transmissions d'informations sur l'Internet lors d'une transaction électronique de ce type sont réalisées sous un format sécurisé dit SSL, acronyme de "Secure Socket Layer" en terminologie anglosaxonne, qui assure le cryptage des informations.

Comme représenté par la flèche 48 sur la figure 3, lorsque le fournisseur vient de recevoir l'ensemble des données spécifiques représentatives du compte de transaction Internet de l'internaute, il se connecte en temps réel à l'autorité de validation des transactions qui possède la base de données 20 dans laquelle se trouve le code du fournisseur effectuant la demande.

Cette base de données comporte notamment des informations permettant, à partir des données fournies par l'internaute, de remonter à l'établissement émetteur du compte considéré.

L'autorité de validation des transactions vérifie ensuite, en se connectant en temps réel à l'établissement 12 gestionnaire du compte de transaction Internet considéré, que l'établissement 12 autorise cette transaction en fournissant à cette autorité le solde du compte et en l'informant de sa validité.

Si l'établissement 12 autorise la transaction, l'autorité de validation des transactions informe le fournisseur en conséquence et, comme représenté par la flèche 50 sur la figure 3, le fournisseur envoie à la station cliente une page Web pour confirmer que l'ordre d'achat a bien été passé.

Dans le cas contraire, le fournisseur envoie à la station cliente une page Web pour prévenir d'une anomalie et du refus de paiement.

Il convient de noter que le compte de transaction Internet du client A peut être approvisionné directement au guichet de l'établissement émetteur du compte 12 par dépôt d'espèces ou par virement de son compte bancaire courant vers le compte de transaction Internet.

On notera qu'un tel virement peut être effectué avantageusement par téléphone en utilisant le mot de passe attribué au client par l'établissement émetteur du compte.

Lorsque le client A possède son compte courant dans l'établissement émetteur, le code précité correspond en fait à celui qu'il se voit attribuer pour l'ensemble des services et opérations qu'il souhaite mettre en place par téléphone sur son compte courant.

La mise en place de l'invention ne nécessite donc pas de remise en cause du système existant dans une banque.

L'invention permet de sécuriser une transaction sur l'Internet entre une station cliente et un site Web fournisseur de produits et/ou de services étant donné qu' avec l'ensemble des données spécifiques réservées aux fins de transaction sur l'Internet qui sont affectées au client A, en cas d'interception de ces données par un fraudeur, celui-ci ne pourra dans le pire des cas que remonter jusqu'au compte de transaction Internet considéré.

Ce compte étant totalement indépendant de tout compte bancaire courant du client, la somme restante sur ce compte, indiquée par le montant figurant en colonne 34 (figure 2), sera la seule à être perdue.

Les risques sont limités pour le client A étant donné que, d'une part, le montant du compte de transaction est plafonné pour des raisons de sécurité et, d'autre part, le montant de la somme en question est spécifiquement déterminé par le client utilisateur du compte.

Ce compte de transaction ne permettant pas de découvert bancaire pour des raisons de responsabilité de l'établissement émetteur du compte, la perte est effectivement limitée, en cas de vol, uniquement au montant restant sur le compte en question.

Le procédé selon l'invention permet de s'adapter facilement et simplement aux mécanismes existants mis en place pour le commerce électronique, dans la mesure où il ne remet pas en cause de tels mécanismes.

Par ailleurs, la transaction est anonyme pour le client A utilisateur du compte de transaction Internet.

Ceci présente les avantages suivants :
- le nom du client utilisateur du compte n'est pas répertorié dans des fichiers commerciaux et donc celui-ci ne recevra pas de courriers publicitaires nombreux,
- le client utilisateur peut se livrer au commerce électronique sur certains sites sans crainte de dévoiler son identité, ce qui pouvait parfois, dans l'art antérieur, présenter des inconvénients lorsque ce même client utilisait sa carte de crédit conventionnelle pour effectuer des transactions sur l'Internet et que le relevé des opérations effectuées sur son compte étaient consultées par d'autres personnes que lui.

Le procédé selon l'invention est particulièrement simple dans la mesure où il ne concerne pas, contrairement à beaucoup de méthodes déployées dans l'art antérieur pour sécuriser les transactions sur l'Internet, une nouvelle technique d'encryptage de données confidentielles.

Parmi d'autres avantages du procédé selon l'invention on peut notamment citer :
- il n'y a aucun frais de gestion du compte pour le client utilisateur, notamment ceux qui sont liés dans un compte conventionnel aux courriers, chéquiers, relevés...,
- le procédé ne dépend pas d'un matériel et/ou système informatique particulier (IBM PC/APPLE- EXPLORER/NETSCAPE...),
- le procédé ne dépend pas d'un site Web particulier ni d'un pays,
- il n'y a aucun investissement spécifique pour le client utilisateur (pas d'achat de logiciel ou de lecteur de carte à puce personnel).

Il convient de noter que dans une variante de réalisation, l'émetteur de compte de transaction Internet peut par exemple être un hypermarché qui constituera alors lui-même l'investisseur représenté en colonne 24 du fichier 22 représenté à la figure 2.

Dans ce cas, rien n'est changé par rapport à ce qui a été dit précédemment, hormis le fait que pour le fournisseur du site Web le client est l'hypermarché.

## Revendications

1. Procédé de sécurisation d'une transaction sur l'Internet entre une station cliente et un site Web d'un fournisseur de produits et/ou de services, **caractérisé en ce qu'**il comporte les étapes suivantes :
- connexion de la station cliente au site Web du fournisseur de produits et/ou de services via l'Internet,
- sélection d'au moins un produit et/ou un service sur ce site Web,
- fourniture au site Web d'un ensemble de données spécifiques représentatives d'un compte dit de transaction sur l'Internet affecté à un client (A), lesdites données spécifiques comportant un numéro dit de carte de transaction qui est délivré par une autorité de validation des transactions, une date d'expiration associée au compte de transaction et des données représentatives du nom du compte de transaction, les données spécifiques représentatives de ce compte étant indépendantes des données contenues dans des comptes bancaires courants du client (A) et ne comportant aucun lien avec le nom dudit client.

2. Procédé de sécurisation d'une transaction sur l'Internet entre une station cliente et un site Web d'un fournisseur de produits et/ou de services, **caractérisé en ce qu'**il comporte les étapes suivantes :
- allocation d'une pluralité de zones mémoires dans un système informatique d'un établissement émetteur de comptes tel qu'une banque,
- création d'ensembles de données spécifiques réservées à des fins de transaction sur l'Internet et dont chaque ensemble est représentatif d'un compte dit de transaction sur l'Internet, lesdites données spécifiques représentatives d'un même compte comportant un numéro dit de carte de transaction qui est délivré par une autorité de validation des transactions, une date d'expiration associée au compte de transaction et des données représentatives du nom du compte de transaction Internet, les données spécifiques représentatives d'un même compte étant indépendantes des données contenues dans des comptes bancaires courants existants,
- stockage de ces ensembles de données spécifiques dans la pluralité de zones mémoires,
- affectation de manière anonyme d'au moins un ensemble de données spécifiques réservées à des fins de transaction sur l'Internet à un client (A),
- création d'une donnée représentative d'une somme d'argent,
- stockage de cette donnée dans la zone mémoire dans laquelle sont stockées l'ensemble des données spécifiques réservées à des fins de transaction sur l'Internet affecté au client (A), la donnée représentative d'une somme d'argent ne provenant pas d'un transfert effectué à partir d'une carte bancaire reliée à un compte courant du client (A),
- connexion de la station cliente au site Web du fournisseur de produits et/ou de services via l'Internet,
- sélection d'au moins un produit et/ou un service sur ce site Web, et
- fourniture au site Web du numéro de carte de transaction, de la date d'expiration associée et du nom du compte de carte de transaction Internet affecté au client (A).

3. Procédé selon la revendication 2, **caractérisé en ce que** les données spécifiques représentatives d'un même compte de transaction Internet comportent également un numéro d'identification dudit compte.
